(19) Europäisches Patentamt / European Patent Office / Office européen des brevets

(11) **EP 2 765 852 B1**

(12) **EUROPEAN PATENT SPECIFICATION**

(45) Date of publication and mention
of the grant of the patent:
**04.03.2015 Bulletin 2015/10**

(21) Application number: **11819123.8**

(22) Date of filing: **23.12.2011**

(51) Int Cl.:
***A01K 73/045*** (2006.01)

(86) International application number:
**PCT/LT2011/000014**

(87) International publication number:
**WO 2013/055195 (18.04.2013 Gazette 2013/16)**

(54) **A TRAWL FOR CATCHING FISH**

SCHLEPPNETZ FÜR FISCHFANG

CHALUT POUR ATTRAPER DES POISSONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.10.2011 LT 2011090**

(43) Date of publication of application:
**20.08.2014 Bulletin 2014/34**

(73) Proprietor: **Uzdaroji Akcine Bendrove
"Akvaservis"
94287 Klaipeda (LT)**

(72) Inventors:
• **ZINCENKO, Viktor**
**LT-95170 Klaipeda (LT)**
• **LITVIN, Aleksandr**
**LT-92300 Klaipeda (LT)**

(74) Representative: **Petniunaite, Jurga
AAA Baltic Service Company
J. Jasinskio Street 16A
03163 Vilnius (LT)**

(56) References cited:
WO-A2-03/081989     SU-A1- 1 386 132
SU-A1- 1 701 219     SU-A3- 1 797 457

## Description

### Field of the invention

The invention relates to the industrial fishing and can be used for catching fish with trawls.

### Background of the invention

In SU 1701219 the improvement of the operational properties of the trawl for catching fish is described as an even distribution of the load on the cable panels of the trawl. In the construction of the trawl, which is being described, supporting planes of the trawl made of cables are interconnected by their lateral sides, thus producing longitudinal series of rhombus-shaped meshes; transitional bands are positioned at the sides of the catching part, thus producing zigzag-shaped sides. In this way the cable panels of the trawl distribute the load evenly through the transitional bands to the panels of the netting part of the trawl.

In SU 1797457 the improvement of operational properties of the trawl for catching fish is described as the mouth part of the trawl having spreader elements that are fixed to the tackles by means of a cantilever. The correct placement of the spreader elements in the trawl is determined by mathematical expression.

Known technical improvements of the trawls for catching fish do not have sufficiently good operational properties.

The closest prototype to the invention is described in SU 1386132. The trawl consists from the mouth part made from cable panels with tackles, several netting panels connected to the mouth part which forms the seine netting part of the trawl. The mouth part is tied up with a netting codend which is comprised of conical and cylindrical parts having respectively 4-16 and 8-16 panels. Lateral sides of the panels of the codend and the seine are interconnected by means of a lacing seam and form tackles. Tackles of the mouth part of the trawl are composed of longitudinal series of rhombus-shaped meshes made of a cable, which has the diameter greater than the diameter of the cable forming the mouth part of the trawl, also, the tackles of the codend, seine and the mouth part are interconnected and thus form a common flexible tackle frame of the trawl.

The netted panels of the seine part of the trawl are subjected to varying loads, which later interfere with the inflow of fish in to the codend.

### Summary of the invention

This invention relates to the improvement of the operational properties of trawl by method of even distribution of loads in the netting fabric, and by prolonging the operational time of the trawl.

In the invention described, a trawl for catching fish consists of netting panels and cable panels. The mouth part is formed by cable panels. The novelty of the invention is that two or more trapeze-shaped netting panels of the same dimensions are joined to each of the cable panel; and tangent of the angle of the displacement of the lateral side to its longitudinal axis of each netting panel is determined by the formula:

$$lga = \frac{1}{n} \frac{e_1 - e_2}{2m}$$

where n - the number of netting panels connected to one of the cable panels; $e_1$ - sum of the length of the frontal bases of the netting panels which are fixed to one of the cable panels;
$e_2$ - sum of the length of the back bases of the netting panels which are fixed to one of the cable panels;
m - height of the netting panel.

By increasing the number of trawl panels the pressure in the netting part is decreased which subsequently decreases the interference with the inflow of the fish into the codend.

### Description of the drawings

A brief description of the drawings of the present invention is as follows:

Fig. 1- front perspective view of the trawl;

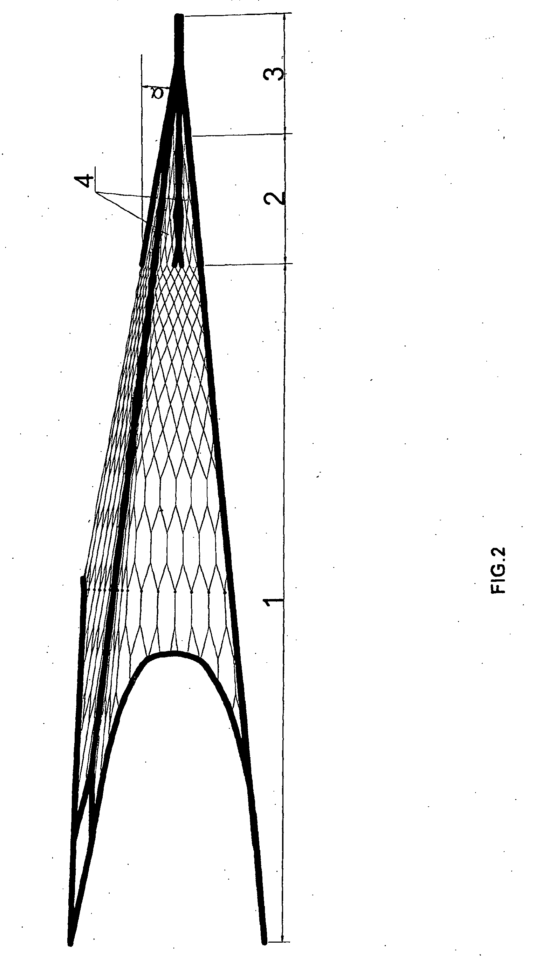

Fig. 2 - side perspective view of the trawl.

### Detailed description of the invention

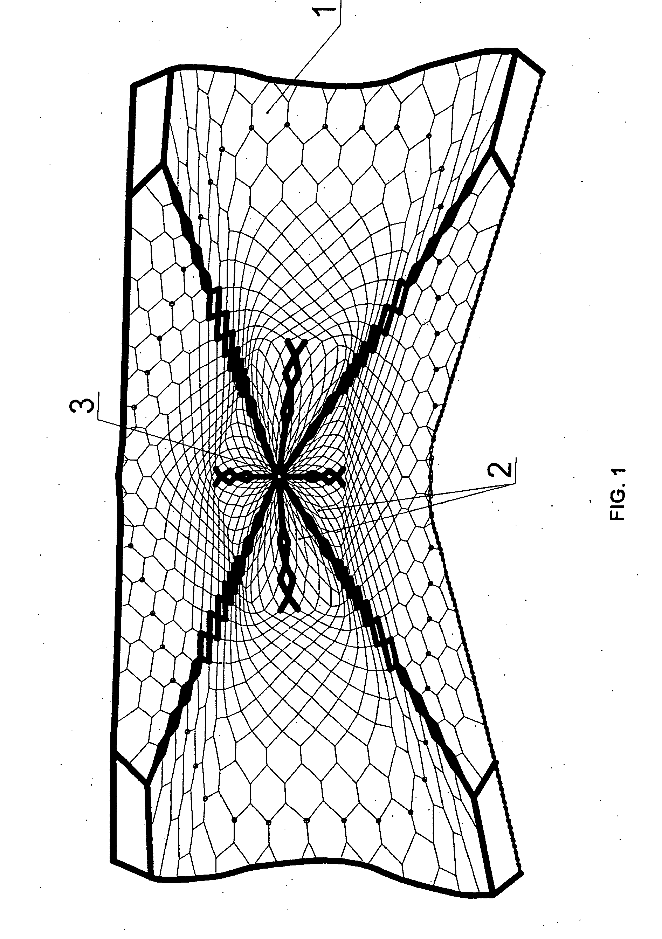

Trawl is a fishing device, having a tapering-sack form. The trawl consists of netting and cable panels. The mouth part (1) of the trawl is composed of cable panels to which the seine part (2), comprised of netting panels, is connected. A codend (3), comprised of conical and cylindrical parts, is fixed to the seine part (2). All parts (Fig. 1) comprising the trawl have 8 panels each, and all these parts have the same dimensions and form throughout the trawl. Cable panels of the mouth part (1) are interconnected with tackles which are composed of longitudinal series of rhombus-shaped meshes which are made of a cable having the diameter greater than the diameter of the cable forming the panels themselves.

Sides of the netting panels of the common part (2) of the seine are interconnected by means of a lacing seam forming tackles of the common part of the seine. Netting panels of the seine part (2) are interconnected with cable panels of the mouth part (1).

Two or more trapeze shaped netting panels (4) of the same dimensions are connected to one of the cord plates, and, tangent of the angle ($a$) of the displacement of the lateral side to its longitudinal axis of each netting plate is determined by a mathematical formula with respect to the dimensions and the number of the netting panels (4).

The conical part of the codend (3) consists of trapeze-shaped panels, having their common sides joined by a lacing seam and forming tackles, and the common sides of the cylindrical part of the codend (3), which has a rectangular shape, are joined by a similar lacing seam, forming other tackles.

In order to form tackles by means of joining the sides of the panels with a lacing seam, 7 mesh holes of a lateral side of a plate are joined. Also the estimated strength of the trawl does not decrease when a large number of netting panels are joined in the seine part (2) and also in the conical and cylindrical parts of the codend (3). Said parts of the trawl can have respectively 2-8, 4-16, 8-16 panels. The seine part (2) together with conical and cylindrical parts of the codend (3) are interconnected.

Tackles of the seine part and the codend are interposed one into another and connected with the tackles of the mouth part and form a common rugged and flexible tackle frame. The frame consists of three separate frames: tackle frame of the mouth part (1), the seine part (2), the conical and the cylindrical parts of the codend (3).

Each of said frames together with the netting fabric comprises a trawl module, also in each of the four modules the panels can be interchanged, and the module itself can be replaced by analogous module or module of other construction.

When the netting parts (modules) are connected to a different number of netting panels and with respectively different numbers of tackles, the main frame of the tackles comprises only a series of tackles and the rest of the tackles (i.e. the sides of the panels which are connected by means of lacing seam) have to be connected to the netting fabric of panels of an adjacent part. Thus it is advisable to tie up in a sheet bent manner the lacing seam with a thread, which is used to form the seam itself, and it's end should be unlaced and connected to the netting fabric of the connected part, forming a connecting knot.

In the instance when the trawl operates with a multi-plate codend, its perimeter is increased at the cross section approaching to the circle, which essentially influences the inflow of the fish into the codend, especially in the critical areas - locations of the connections of the seine part (2) back end with the front end of the conical part of the sack (3) and the end of said conical part with the beginning of the cylindrical part.

During the fishing process meshes of the netting panels of the codend open evenly from a tackle to a tackle which increases the perimeter and increases the quality of water sifting which becomes more equally distributed.

Also, when a trawl has a multi-plate codend an even strain of the netting fabric and the lacing seams, which comprise the tackles of the seine and the sack, is achieved. Multi-panel codend allows avoiding twists in the codend and formation of bosoms. The big number of seams does not increase the overall resistance of the trawl because the sifting of water through the netting fabric becomes better and more equally distributed.

The increasing number of seams and netting panels increases the strength, service time and decreases the rate of accidents of the trawl because when fishing with a trawl, not the netting fabric but the lacing seams that form the tackles of the seine and sack parts and which are more resistant to rupture and wane are directly touching the ground. The same is when the cable experiences friction with the slipway and deck of a ship.

Even and reduced opening of the mesh in the netting fabric increases the hydrodynamic lifting force which straightens the codend, prevents it from twisting, lifts up from the ground and pushes it up to the surface when the trawl is being retracted to the fishing ship. Formation of the tackles of the mouth part from a longitudinal series of rhombus-shaped mesh which has it's sides aligned to the diagonal of a mesh of the netting fabric of the seine part, also ensures even distribution of a load to the cable of the mouth part (1) and the netting fabric of the seine part (2).

Also, pre-joining of tackles (6-8), joining of the tackles, which are entering the netting fabric of the panels, to the tackles tackles, which forms the common frame of the tackles, through the diagonal strengthening lines increases the durability and promotes even distribution of a load.

Number of panels in the trawl codend is reasoned in that increasing their number (to more than 16) would significantly increase the overall resistance of the trawl, but if the number of said panels is less than 8 in the cylindrical part and less than 4 in the conical part an optimal fishing perimeter of the trawl cannot be obtained.

**Claims**

1. Trawl for catching fish, consisting of netting panels and cable panels, where the cable panels form the mouth part, is **characterised in that** to each cable panel two or more trapeze-shaped netting panels, which are of the same dimensions, are joined, also tangent of the angle of the displacement of the lateral side to its longitudinal axis of each netting panel is determined by the formula:

$$tg\alpha = \frac{1}{n}\ \frac{e_1 - e_2}{2m}$$

where n - the number of netting panels connected to one of the cable panels;

$e_1$ - sum of the length of the frontal bases of the netting panels which are fixed to one of the cable panels;

$e_2$ - sum of the length of the back bases of the netting panels which are fixed to one of the cable panels;

m - height of the netting panel.

## Patentansprüche

1. Ein Schleppnetz zum Fangen von Fischen, das aus Netzpaneelen und Seilpaneelen besteht, bei denen die Seilpaneele den Öffnungsteil bilden, kennzeichnet sich dadurch, dass an jedem Seilpaneel zwei und mehr trichterförmige Netzpaneele mit gleichen Abmessungen angekoppelt sind, außerdem dadurch, dass der Tangens des Neigungswinkels der Außenkante eines jeden Netzpaneels zu ihrer Längsachse hin gemäß folgender Formel ermittelt wird:

$$tg\alpha = \frac{1}{n} \ \frac{e_1 - e_2}{2m}$$

hier: n - die Anzahl der Netzpaneele, die an einem Seilpaneel angekoppelt sind;

$e_1$ - die Summe der Längen von Frontalunterteilen der Netzpaneele, die an einem Seilpaneel angekoppelt sind;
$e_2$ - die Summe der Längen von Kehrunterteilen der Netzpaneele, die an einem Seilpaneel angekoppelt sind;
m - die Höhe des Netzpaneels.

## Revendications

1. Le chalut de pêche composé des panneaux de filet et de câbles, lorsque les panneaux de câbles forment une partie de l'embouchure, est **caractérisé en ce que** deux ou plus panneaux de filet identiques en forme de trapèze sont rattachés à chaque panneau de câbles et la tangente de l'angle formé par un côté de chaque panneau de filet et son axe longitudinal est déterminée selon la formule :

$$tg\alpha = \frac{1}{n} \ \frac{e_1 - e_2}{2m}$$

Dont:

n - le nombre de panneaux de filet, rattachés à un panneau de câbles;
$e_1$ - le total des longitudes des bases avant de panneaux de filet, rattachés à un panneau de câbles ;

$e_2$ - le total des longitudes des bases arrière de panneaux de filet, rattachés à un panneau de câbles ;
m - l'hauteur d'un panneau de filet.

FIG. 1

FIG.2

EP 2 765 852 B1

**EP 2 765 852 B1**

**REFERENCES CITED IN THE DESCRIPTION**

**Patent documents cited in the description**

- SU 1701219
- SU 1797457
- SU 1386132